# FASCICULE DE BREVET EUROPEEN

(11) **EP 1 990 633 B1**
(45) Date de publication et mention de la délivrance du brevet: **16.07.2014**
(21) Numéro de dépôt: 08155425.5
(22) Date de dépôt: 30.04.2008
(51) Int. Cl.: G01L 1/22, G01N 27/04, F01D 5/28, C04B 41/89

(54) **Dispositif de mesure de déformations et son procédé de fabrication**
Vorrichtung zur Deformationsmessung und Herstellungsverfahren dafür
Device for measuring deformations and process for producing the same

(30) Priorité: 30.04.2007 FR 0754789
(43) Date de publication de la demande: 12.11.2008
(73) Titulaire: SNECMA, 75015 Paris (FR)
(72) Inventeur: Bertrand, Pierre, 25200 Montbelliard (FR); Coddet, Christian, 90200 Giromagny (FR); Costil, Sophie, 90300 Offemont (FR); Leman, Frédéric, 92120 Montrouge (FR); Lukat, Sébastien, 68100 Mulhouse (FR)
(74) Mandataire: Intès, Didier Gérard André

(56) Documents cités:
- GB-A- 893 571
- GB-A- 2 068 562
- JP-A- 9 159 170
- US-B1- 6 299 988

## Description

La présente invention concerne un procédé pour le dépôt d'un revêtement d'alumine sur une pièce dont la surface est en carbure de silicium (SiC).

Il peut donc s'agir soit de pièces massives en SiC, soit de pièces dont le substrat n'est pas en SiC et recouvertes d'une couche de SiC. Des pièces constituées d'un substrat qui est recouvert de SiC sont utilisées dans des applications hautes températures, c'est-à-dire entre 300°C et 1100°C. Le substrat est par exemple un composite à matrice céramique (CMC), c'est-à-dire une céramique renforcée par exemple par des fibres céramiques ou de carbone. La couche de SiC est destinée à conférer à la pièce une meilleure résistance à l'oxydation et de meilleures propriétés mécaniques en température. Grâce à ces propriétés, ces pièces sont utilisées notamment dans les turbomachines aéronautiques.

Pour certaines applications, il est nécessaire de déposer sur la surface en SiC un revêtement, par exemple métallique ou céramique, tel que la mullite, la cordiérite, la zircone. Ce revêtement est généralement destiné à améliorer la tenue en température ou la résistance à la corrosion de la pièce sur laquelle il est déposé. Ce dépôt peut se faire soit par projection thermique atmosphérique, soit au moyen d'un ciment.

Typiquement ledit revêtement est de l'alumine Al₂O₃. L'alumine est déposée soit par projection thermique atmosphérique d'alumine (projection plasma atmosphérique de poudre ou projection flamme-baguette), soit sous forme d'un ciment à base d'alumine, ou encore par combinaison de ces procédés, qui sont bien connus de l'état de la technique.

Les essais mécaniques et thermiques effectués sur des pièces dont la surface est en SiC recouvertes d'un revêtement d'alumine montrent que le mode de ruine principal est une rupture à l'interface entre la surface en SiC et le revêtement d'alumine.

Afin d'améliorer la ténacité de cette interface, des modifications de l'état de surface du SiC ont été effectuées. Ainsi, on a par exemple effectué un sablage (projection par air comprimé de particules d'alumine de quelques centaines de microns de diamètre) de la surface en SiC afin d'en augmenter la rugosité. Cependant le sablage a conduit à un endommagement de la surface en SiC sans création d'une rugosité favorable.

La présente invention vise à remédier à ces inconvénients.

Le présent exposé concerne un procédé pour réaliser un revêtement d'alumine sur une pièce dont la surface est en carbure de silicium SiC qui permette d'améliorer la ténacité de l'interface entre la surface en SiC et le revêtement d'alumine.

Ce procédé comporte les étapes suivantes :
a) un dépôt sur la surface en SiC d'une sous-couche d'accroche en silicium par projection plasma sous vide, et
b) un dépôt sur ladite sous-couche d'accroche en silicium d'un revêtement d'alumine par projection thermique atmosphérique.

Grâce à ces dispositions, le revêtement d'alumine est déposé sur une surface (la sous-couche de silicium) qui a une plus grande rugosité que celle de la surface en SiC, ce qui favorise l'ancrage mécanique du revêtement d'alumine. En outre, l'alumine a une meilleure affinité physico-chimique avec le silicium qu'avec le SiC. De plus, la bonne correspondance des coefficients de dilatation du silicium et du SiC entraîne une minimisation des contraintes mécaniques à l'interface silicium/SiC lors des sollicitations thermiques. Ainsi, l'interface pièce-revêtement d'alumine résiste mieux aux hautes températures.

Des pièces dont le substrat est recouvert d'une couche de carbure de silicium SiC sont couramment utilisées dans des applications hautes températures, comme indiqué plus haut. Il est nécessaire d'optimiser le dimensionnement de ces pièces, pour raisons d'encombrement, de poids, et de coût. Ce dimensionnement s'effectue notamment par des essais en laboratoire ou en condition de fonctionnement, pendant lesquels on étudie les déformations de ces pièces sous sollicitations thermomécaniques. Afin de mesurer ces déformations, on utilise des jauges de déformations, typiquement des jauges en filament libre (il peut s'agir également de jauges en couches minces, mais leur technique de dépôt complexe les rend moins utilisées). Ces jauges comportent un filament en alliage qui est fixé sur la pièce. Lorsque la pièce se déforme, le filament s'étire ou se contracte, ce qui entraîne une variation en conséquence de sa résistivité électrique. En faisant passer un courant dans le filament, on peut donc mesurer en temps réel les variations de la résistivité électrique du filament, et de fait les déformations de la pièce sur laquelle il est fixé. Afin de mesurer effectivement ces déformations, il est indispensable que la jauge adhère parfaitement à la surface de la pièce, afin que les déformations de la surface de la pièce soient effectivement transmises à la jauge. Typiquement, on dispose la jauge sur un premier revêtement en alumine préalablement déposé sur la pièce, puis on recouvre la jauge et ce premier revêtement par un revêtement en alumine supplémentaire qui maintient la jauge en contact intime avec le premier revêtement.

Cependant, s'il se produit une désolidarisation du premier revêtement d'avec la surface de la pièce, la jauge ne mesure pas effectivement les déformations de la surface de la pièce, et les mesures effectuées ne sont donc pas fiables. Or, comme indiqué plus haut, dans le cas de pièces dont le substrat est recouvert de SiC et qui sont recouvertes d'un revêtement d'alumine selon l'état de la technique, il se produit à hautes températures un délaminage à l'interface pièce/revêtement. Ce délaminage se produit même dans le cas où la couche de SiC a subi un sablage. Il est donc nécessaire d'améliorer l'adhésion entre le premier revêtement de céramique et la couche de SiC, et donc avec la pièce sous-jacente. Cette meilleure adhésion est obtenue grâce au dépôt sur la couche de SiC d'une sous-couche d'accroche en silicium par projection plasma sous vide, tel que décrit plus haut.

Par conséquent l'invention vise à proposer un procédé, tel que défini dans la revendication 1, pour la réalisation d'un dispositif de mesure de déformations, qui comprend les étapes suivantes :
a) un dépôt sur la surface en SiC d'une pièce constituée d'un substrat recouvert d'une couche de SiC déposée par dépôt chimique en phase vapeur d'une sous-couche d'accroche en silicium par projection plasma sous vide,
b) un dépôt sur la sous-couche d'accroche en silicium d'un revêtement d'alumine par projection thermique atmosphérique,
c) une pose sur le revêtement d'alumine d'une jauge de déformations en filament libre maintenue sur son support, le support possédant des ouvertures,
d) un dépôt d'un deuxième revêtement d'alumine par projection thermique atmosphérique sur la jauge de déformations et le revêtement à travers lesdites ouvertures,
e) un enlèvement du support,
f) un dépôt d'un troisième revêtement d'alumine par projection thermique atmosphérique sur le revêtement, le deuxième revêtement, et la jauge de déformations.

L'invention concerne également un dispositif de mesure de déformations d'une pièce constituée d'un substrat recouvert d'une couche de carbure de silicium SiC déposée par dépôt chimique en phase vapeur.

Selon l'invention, ce dispositif comprend un premier revêtement d'alumine déposé par projection thermique atmosphérique sur une sous-couche d'accroche en silicium déposée sur la couche de carbure de silicium par projection plasma sous vide, une jauge de déformations en filament libre disposée sur le premier revêtement, et un revêtement d'alumine supplémentaire déposé par projection thermique atmosphérique sur la jauge de déformations.

Grâce à ces dispositions, le premier revêtement d'alumine est déposé sur une surface (la sous-couche de silicium) qui a une rugosité supérieure à celle de la surface de la couche de SiC, ce qui favorise l'ancrage mécanique de ce premier revêtement. En outre, l'alumine a une meilleure affinité physico-chimique avec le silicium qu'avec le SiC, donc une meilleure adhérence. De plus, la bonne correspondance des coefficients de dilatation du silicium et du SiC entraîne une minimisation des contraintes mécaniques à l'interface silicium/SiC lors des sollicitations thermiques. Ainsi, l'interface pièce-revêtement résiste mieux aux hautes températures, et la jauge de déformation reste solidaire de la pièce dont on souhaite mesurer les déformations à hautes températures. En conséquence des mesures plus fiables des déformations de la pièce sur laquelle est fixée la jauge peuvent être effectuées.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- les figures 1A, 1B, et 1C illustrent les étapes du procédé selon l'invention appliqué à un substrat recouvert d'une couche de SiC,
- la figure 2 est une vue en perspective d'une jauge de déformations sur son support,
- la figure 3 est une vue en perspective éclatée d'un dispositif de mesure de déformations d'une pièce selon l'invention.

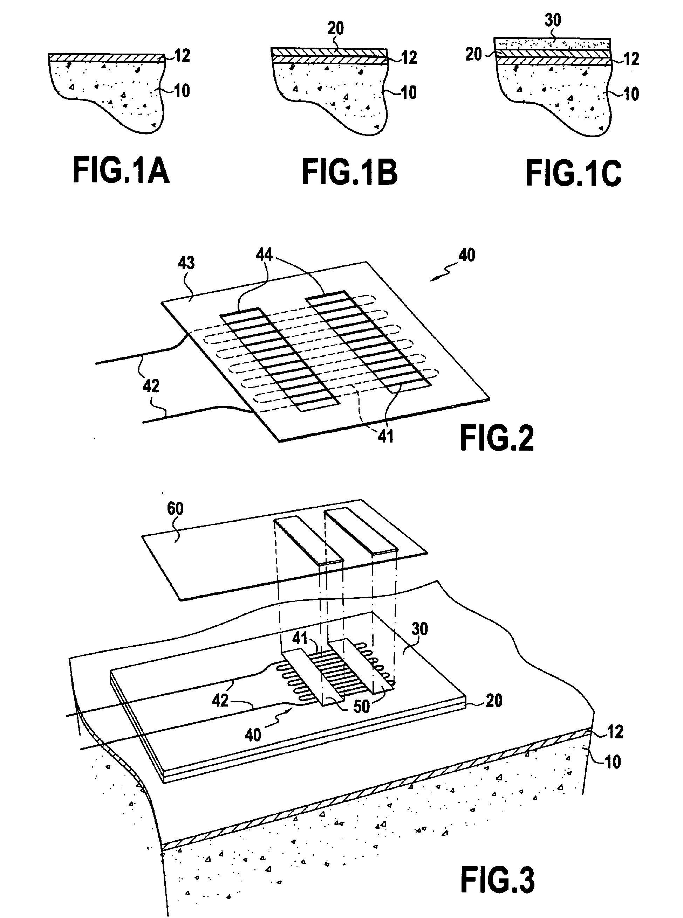

La figure 1A montre une pièce destinée à des applications hautes températures, dont le substrat 10 est recouvert d'une couche de carbure de silicium (SiC) 12. Le substrat 10 est par exemple un matériau composite à matrice céramique, ou un matériau composite à matrice céramique auto-cicatrisante. La matrice du composite peut être du SiC, ou être formée d'une pluralité de couches de céramiques réfractaires précurseur de verres du système ternaire Si-B-C (silicium-bore-carbone). Le renforcement de ces composites est par exemple constitué par des fibres en carbone ou en céramique. Dans les applications de turbomachines aéronautiques, de telles pièces sont typiquement des pièces minces, de forme rectangulaire plane ou tronconique, et dont l'encombrement est de l'ordre de plusieurs centaines de millimètres.

La couche de SiC 12 déposée sur le substrat est déposée par la technique connue du dépôt chimique en phase vapeur.

La figure 1B montre la même pièce, dont la couche de SiC 12 est recouverte d'une sous-couche d'accroche en silicium 20 déposée sur cette couche de SiC par projection plasma sous vide (ou "VPS", *Vacuum Plasma Spraying).* La technique de projection plasma sous vide est connue, et seuls ses grands principes sont rappelés ici. La technique de projection plasma sous vide est une technique de projection thermique à torche à plasma d'arc soufflé, qui se pratique dans une enceinte remplie d'argon à faible pression (c'est-à-dire moindre que la pression atmosphérique), et qui consiste à introduire au sein d'un jet très énergétique (un jet de plasma) le matériau à déposer sous forme pulvérulente (c'est-à-dire sous forme de particules, ici de quelques dizaines de microns de diamètre moyen). Les particules sont alors fondues par le jet et simultanément accélérées en direction de la pièce à revêtir. Ainsi ces particules s'écrasent sur la surface de la pièce sous forme de gouttes, qui se solidifient très rapidement après leur impact par conduction de leur chaleur en formant des lamelles sur la surface de la pièce. L'empilement de ces lamelles perpendiculairement à la surface de la pièce conduit progressivement à la formation du dépôt. La vitesse de croissance du revêtement est de l'ordre de 100 microns par minute.

Par exemple, on peut utiliser de la poudre de silicium de granulométrie entre 5 et 25 microns, que l'on projette, dans une enceinte où règne une pression de 120 millibars, au moyen d'une torche à plasma avec un mélange plasmagène (gaz destiné à faciliter le dépôt plasma) argon et hydrogène à 15 à 20% en volume d'hydrogène et une puissance de 40 à 45 kW, sur la surface à revêtir préalablement préchauffée à 750°C. La sous-couche d'accroche en silicium peut avoir une épaisseur entre 50 et 70 microns.

La figure 1C montre la même pièce que sur la figure 1B, sur laquelle un revêtement 30 d'alumine Al₂O₃ a été déposé.

Ce revêtement 30 est typiquement déposé par projection thermique atmosphérique. Le dépôt par projection thermique atmosphérique est en général préféré au dépôt d'un ciment, car le ciment a tendance à se fissurer à hautes températures. En effet, les dépôts effectués par projection thermique atmosphérique sont plus cohésifs et tenaces. La projection thermique est un groupe de procédés de revêtement de surface dans lesquels de fines particules du matériau à déposer sont déposées dans un état fondu ou semi fondu sur un substrat. La projection thermique atmosphérique peut être une projection plasma ou une projection flamme. Ces deux techniques sont connues, et seuls leurs principes généraux sont rappelés ci-après.

La technique de projection plasma est une technique de projection thermique à torche à plasma d'arc soufflé qui consiste à introduire au sein d'un jet très énergétique (un jet de plasma) le matériau à déposer sous forme pulvérulente (c'est-à-dire sous forme de particules, ici de quelques dizaines de microns de diamètre moyen). Les particules sont alors fondues par le jet et simultanément accélérées en direction de la pièce à revêtir. Ainsi ces particules s'écrasent sur la surface de la pièce sous forme de gouttes, qui se solidifient très rapidement après leur impact par conduction de leur chaleur en formant des lamelles sur la surface de la pièce. L'empilement de ces lamelles perpendiculairement à la surface de la pièce conduit progressivement à la formation du dépôt. La projection est conduite à la pression atmosphérique sous air. La vitesse de croissance du revêtement est de l'ordre de 100 microns par minute.

La technique de projection flamme consiste à introduire au sein de la flamme d'une torche oxyacétylénique une baguette (tige) en matériau que l'on souhaite projeter sur la surface de la pièce. Le matériau est alors fondu, pulvérisé en fines particules qui sont accélérées en direction de la pièce à revêtir à la surface de laquelle elles s'écrasent sous forme de gouttes, qui se solidifient très rapidement après leur impact par conduction de leur chaleur en formant des lamelles sur la surface de la pièce. L'empilement de ces lamelles conduit progressivement à la formation du dépôt. La projection est conduite sous air à la pression atmosphérique. La vitesse de croissance du revêtement est rapide (de l'ordre de 100 microns par minute).

Des essais ont été effectués par la demanderesse sur des pièces avec un substrat en composite à matrice céramique avec une couche de SiC et une sous-couche d'accroche en silicium déposée par projection plasma sous vide, et les mêmes pièces sans sous-couche d'accroche. La sous-couche d'accroche en silicium a une épaisseur d'environ 70 microns. Toutes les pièces ont ensuite été revêtues d'alumine par projection flamme. Les essais de fatigue thermique (pendant 60 cycles, un cycle correspondant à : montée à 1100°C, maintien une heure à 1100°C, refroidissement à l'air jusqu'à 300°C) ont montré que les pièces avec une sous-couche d'accroche en silicium ne présentaient pas de trace de délaminage à l'interface SiC/alumine, contrairement aux pièces sans sous-couche d'accroche.

Les pièces obtenues par le procédé selon l'invention sont typiquement utilisées dans des turbomachines aéronautiques, et sont par exemple des volets de tuyère, des mélangeurs, des éléments de chambre de combustion.

Selon l'invention, on réalise un dispositif de mesure des déformations sur une pièce constituée d'un substrat sur lequel on a déposé une couche de SiC par dépôt chimique en phase vapeur (le substrat peut être par exemple un des composites céramique donnés ci-dessus). Ce dispositif de mesure comprend une jauge en filament libre grâce à laquelle on mesure les déformations de la pièce.

La figure 2 montre une jauge en filament libre 40. Une telle jauge est connue de l'homme du métier, et seule sa structure générale est rappelée ici. La jauge 40 comprend un filament qui est conformé en accordéon comme suit : le filament est recourbé sur lui-même une première fois pour former un "U" ayant une hauteur donnée, puis il est recourbé sur lui-même une seconde fois pour former un second "U" situé dans le même plan que le premier "U" et dont les branches ont la même hauteur, mais inversé. Le filament est ainsi recourbé sur lui-même de nombreuses fois selon le même processus, sans que les branches des "U" ne se touchent, de façon à former dans un plan une grille 41. Les branches des "U" consécutifs constituent ainsi les brins de la grille 41, qui sont parallèles entre eux. La grille 41 a une forme générale rectangulaire, et se prolonge d'un côté par les deux extrémités 42 du filament, qui prolongent respectivement la première branche du premier "U" et la dernière branche du dernier "U" de la grille 41. Les extrémités 42 sont sensiblement parallèles et situés dans le même plan que la grille 41. La jauge comprend également un support 43. Ce support 43 est typiquement un ruban adhésif sur lequel est collée la grille 41. Le support 43 permet donc de maintenir la configuration de la grille 41 lors de la manipulation de la jauge 40, et permet notamment de maintenir en place les boucles en "U" et les brins constituant la grille 41 afin que ces brins ne se touchent pas (ceci afin d'éviter un court-circuit dans le filament). Le support 43 a une forme rectangulaire s'étendant au-delà de la grille 41, de telle sorte que seules les extrémités 42 du filament dépassent du support 43. Le support 43 est orienté de telle sorte que deux de ses côtés sont parallèles aux brins de la grille 41, les deux autres étant perpendiculaires. Les extrémités 42 du filament sont connectées à un appareillage électrique qui fait passer un courant dans le filament, afin de mesurer en temps réel les variations de la résistivité électrique du filament, et de fait les déformations de la pièce sur laquelle il est fixé. En effet, lorsque la pièce se déforme dans la direction des brins formant la grille 41, le filament s'étire ou se contracte, et sa résistivité électrique varie en conséquence. C'est pour augmenter la sensibilité de la mesure que le filament est recourbé plusieurs fois sur lui-même pour former une grille 41, comme décrit ci-dessus. Deux ouvertures 44 rectangulaires sont découpées dans le support 43 de telle sorte que leur plus grande dimension s'étende perpendiculairement aux brins formant la grille 41. Les ouvertures 44 sont suffisamment allongées pour que l'on voie tous les brins de la grille 41 par ces ouvertures. Les ouvertures 44 ont une largeur (dans la direction des brins) limitée afin de ne couvrir qu'une petite partie de la surface délimitée par la grille 41. Ainsi, la plus grande longueur du filament constituant la grille 41 reste collée sur le support 43. Une des ouvertures 44 est située vers l'extrémité de la grille 41 la plus proche des extrémités 42 du filament, et l'autre ouverture 44 est située vers l'autre extrémité de la grille 41.

Le filament de la jauge 40 est un alliage métallique, par exemple un alliage nickel-chrome (Ni-Cr), un alliage fer-chrome-aluminium (Fe-Cr-Al), ou un alliage platine-tungstène (Pt-W). Le diamètre du filament est par exemple de 18 microns au niveau de la grille 41, et de 76 microns au niveau des extrémités 42.

Le dispositif de mesure des déformations de la pièce est réalisé de la façon suivante : la couche de SiC 12 (qui a été préalablement déposée sur le substrat 10 de la pièce par dépôt chimique en phase vapeur) est tout d'abord revêtue d'une sous-couche d'accroche 20 en silicium par projection plasma sous vide, comme indiqué dans la description de la figure 1B. On dépose ensuite sur une partie de la sous-couche d'accroche 20 un premier revêtement 30 d'alumine par projection thermique atmosphérique (projection plasma ou une projection flamme). Par exemple, on peut utiliser de la poudre d'alumine de granulométrie entre 22 et 45 microns, que l'on projette au moyen d'une torche plasma avec un mélange argon et hydrogène à 30% en volume et une puissance de 45 kW. Les rugosités de la couche de silicium permettent une bonne adhérence du premier revêtement 30 d'alumine sur cette couche.

On place ensuite sur le premier revêtement 30 d'alumine la jauge 40, le support 43 étant au dessus de la grille 41. Le premier revêtement 30 d'alumine permet ici d'isoler la jauge 40 du substrat. La jauge 40 est maintenue en place grâce au support 43, et on dépose sur la grille 41, au niveau des fenêtres 44, un deuxième revêtement 50 d'alumine similaire au premier. Le dépôt du deuxième revêtement 50 est également effectué par projection thermique atmosphérique. Cette deuxième couche 50 a ainsi la forme de deux bandes rectangulaires, chacune d'une superficie égale à la superficie d'une des fenêtres 44, et déposée à l'endroit d'une de ces fenêtres 44. Le deuxième revêtement 50 est donc directement en contact avec le filament de la grille 41, et maintient ce filament sur le premier revêtement 30. On peut alors retirer le support 43, la grille étant maintenant maintenue en place par le deuxième revêtement 50. Ensuite, on dépose, par projection thermique atmosphérique, un troisième revêtement 60 d'alumine (similaire aux deux premiers) qui vient recouvrir le deuxième revêtement 50, les parties de la grille 41 non recouvertes par le deuxième revêtement 50, et une partie des extrémités 42. Les deux bouts des extrémités 42 ne sont pas recouverts par le troisième revêtement 60, afin de pouvoir être connectés à une source électrique pour la mesure des déformations du filament de la grille 41. Par exemple, le premier revêtement a une épaisseur de 100 microns, le deuxième revêtement a une épaisseur de 50 microns, et le troisième revêtement a une épaisseur de 100 microns.

Le deuxième revêtement 50 et le troisième revêtement 60 constituent ensemble un revêtement d'alumine supplémentaire qui maintient la jauge 40 sur le premier revêtement 30, la jauge 40 étant ainsi noyée dans l'alumine du premier revêtement 30 et du revêtement supplémentaire. Grâce aux rugosités de la couche de silicium, le bloc d'alumine constitué du premier revêtement 30 et du revêtement supplémentaire est solidaire de la pièce, même aux hautes températures (300°C à 1100°C) auxquelles la pièce est soumise en service (par exemple dans une turbomachine aéronautique). Ainsi les déformations de la pièce sont correctement transmises à ce bloc d'alumine, et donc au filament de la jauge 40, ce qui permet des mesures précises des déformations de la pièce.

Le procédé de dépôt de la jauge 40 sur la première couche 30 décrit ci-dessus est donné à titre d'exemple, le principe étant le même pour le dépôt d'une autre jauge en filament libre, à condition qu'à l'issue de procédé de dépôt, le filament de la jauge 40 soit noyé dans le bloc d'alumine constitué du premier revêtement 30 et du revêtement supplémentaire.

Le procédé pour réaliser un revêtement sur un substrat dont la surface est en SiC, qui est décrit dans la présente invention, couvre également le cas où ce revêtement est réalisé sur une pièce en SiC massif.

## Revendications

1. Procédé pour la réalisation d'un dispositif de mesure de déformations, **caractérisé en ce qu'**il comporte les étapes suivantes :
a) un dépôt sur la surface en SiC d'une pièce constituée d'un substrat (10) recouvert d'une couche de SiC (12) déposée par dépôt chimique en phase vapeur d'une sous-couche d'accroche en silicium (20) par projection plasma sous vide, et
b) un dépôt sur ladite sous-couche d'accroche en silicium (20) d'un revêtement (30) d'alumine par projection thermique atmosphérique,
c) une pose sur ledit revêtement (30) d'une jauge de déformations (40) en filament libre maintenue sur son support (43), ledit support possédant des ouvertures (44),
d) un dépôt d'un deuxième revêtement (50) d'alumine par projection thermique atmosphérique sur ladite jauge de déformations (40) et ledit revêtement (30) à travers lesdites ouvertures (44),
e) un enlèvement dudit support (43),
f) un dépôt d'un troisième revêtement (60) d'alumine par projection thermique atmosphérique sur ledit premier revêtement (30), ledit deuxième revêtement (50), et ladite jauge de déformations (40).

2. Procédé selon la revendication 1, **caractérisé en ce que** la sous-couche d'accroche a une épaisseur de 50 à 70 microns.

3. Procédé selon la revendication 1 ou 2, **caractérisé en ce que** la projection thermique atmosphérique est choisie entre une projection plasma et une projection flamme.

4. Procédé selon l'une quelconque des revendications 1 à 3, **caractérisé en ce que** ledit substrat (10) est choisi entre un matériau composite dont la matrice est du carbure de silicium SiC et un matériau composite à matrice céramique auto-cicatrisante.

5. Dispositif de mesure de déformations d'une pièce constituée d'un substrat (10) recouvert d'une couche de carbure de silicium SiC (12) déposée par dépôt chimique en phase vapeur, **caractérisé en ce qu'**il comprend un premier revêtement (30) d'alumine déposé par projection thermique atmosphérique sur une sous-couche d'accroche en silicium (20) déposée sur ladite couche de carbure de silicium par projection plasma sous vide, une jauge de déformations (40) en filament libre disposée sur ledit premier revêtement (30), et un revêtement d'alumine supplémentaire déposé par projection thermique atmosphérique sur ladite jauge de déformations.

## Patentansprüche

1. Verfahren zur Herstellung einer Vorrichtung zur Messung von Verformungen, **dadurch gekennzeichnet, dass** es die folgenden Schritte umfasst:
a) ein Abscheiden auf der SiC-Oberfläche eines Teils, bestehend aus einem Substrat (10), das mit einer durch chemische Gasphasenabscheidung abgeschiedenen SiC-Schicht (12) überzogen ist, einer Silicium-Haftgrundschicht (20) durch Vakuumplasmaspritzen, und
b) ein Abscheiden einer Beschichtung (30) aus Aluminiumoxid durch atmosphärisches thermisches Spritzen auf der Silicium-Haftgrundschicht (20),
c) ein Verlegen, auf der Beschichtung (30), eines auf seinem Träger (43) gehaltenen Verformungsmessers (40) aus freiem Faden, wobei der Träger Öffnungen (44) besitzt,
d) ein Abscheiden einer zweiten Beschichtung (50) aus Aluminiumoxid durch atmosphärisches thermisches Spritzen auf dem Verformungsmesser (40) und der Beschichtung (30) durch die Öffnungen (44) hindurch,
e) ein Entfernen des Trägers (43),
f) ein Abscheiden einer dritten Beschichtung (60) aus Aluminiumoxid durch atmosphärisches thermisches Spritzen auf der ersten Beschichtung (30), der zweiten Beschichtung (50) und dem Verformungsmesser (40).

2. Verfahren nach Anspruch 1, **dadurch gekennzeichnet, dass** die Haftgrundschicht eine Dicke von 50 bis 70 Mikron aufweist.

3. Verfahren nach Anspruch 1 oder 2, **dadurch gekennzeichnet, dass** das atmosphärische thermische Spritzen zwischen einem Plasmaspritzen und einem Flammspritzen gewählt ist.

4. Verfahren nach einem der Ansprüche 1 bis 3, **dadurch gekennzeichnet, dass** das Substrat (10) zwischen einem Verbundwerkstoff, dessen Matrix Siliciumcarbid SiC ist, und einem Verbundwerkstoff mit selbstheilender Keramikmatrix gewählt ist.

5. Vorrichtung zur Messung von Verformungen eines Teils, das von einem Substrat (10), welches mit einer durch chemische Gasphasenabscheidung abgeschiedenen Schicht aus Siliciumcarbid SiC (12) überzogen ist, gebildet ist, **dadurch gekennzeichnet, dass** sie eine erste Beschichtung (30) aus Aluminiumoxid, die durch atmosphärisches thermisches Spritzen auf einer Silicium-Haftgrundschicht (20) abgeschieden ist, welche durch Vakuumplasmaspritzen auf der Siliciumcarbidschicht abgeschieden ist, einen Verformungsmesser (40) aus freiem Faden, der auf der ersten Beschichtung (30) angeordnet ist, sowie eine zusätzliche Beschichtung aus Aluminiumoxid, die durch atmosphärisches thermisches Spritzen auf dem Verformungsmesser abgeschieden ist, umfasst.

## Claims

1. A method of making a device for measuring deformation, the method being **characterized in that** it comprises the following steps:
a) depositing, on the SiC surface of a part constituted by a substrate (10) covered with an SiC layer (12) deposited by chemical vapor deposition, a silicon adhesion underlayer (20) by vacuum plasma spraying;
b) depositing on said silicon adhesion underlayer (20) an alumina coating (30) by atmospheric thermal spraying;
c) placing a free filament strain gauge (40) on said coating (30), the gauge being held on its support (43), and said support possessing openings (44);
d) depositing a second alumina coating (50) on said strain gauge (40) and on said coating (30) by atmospheric thermal spraying through said openings (44);
e) removing said support (43); and
f) depositing a third alumina coating (60) by atmospheric thermal spraying on said first coating (30), on said second coating (50), and on said strain gauge (40).

2. A method according to claim 1, **characterized in that** the adhesion underlayer has a thickness of 50 µm to 70 pm.

3. A method according to claim 1 or claim 2, **characterized in that** the atmospheric thermal spraying is selected between plasma spraying and flame spraying.

4. A method according to any one of claims 1 to 3, **characterized in that** said substrate (10) is selected between a composite material having a silicon carbide (SiC) matrix and a composite material having a self-healing ceramic matrix.

5. A device for measuring deformation of a part constituted by a substrate (10) covered with a layer (12) of silicon carbide (SiC) deposited by chemical vapor deposition, the device being **characterized in that** it comprises a first alumina coating (30) deposited by atmospheric thermal spraying by atmospheric thermal spraying onto a silicon adhesion underlayer (20) deposited on said silicon carbide layer by vacuum plasma spraying, a free filament strain gauge (40) deposited on said first coating (30), and an additional alumina coating deposited by atmospheric thermal spraying on said strain gauge.
